# EUROPÄISCHE PATENTSCHRIFT

(11) **EP 1 996 364 B1**
(45) Veröffentlichungstag und Bekanntmachung des Hinweises auf die Patenterteilung: **09.01.2019**
(21) Anmeldenummer: 07722028.3
(22) Anmeldetag: 14.03.2007
(51) Int. Cl.: B23K 13/01

(54) **VERFAHREN UND VORRICHTUNG ZUM VERBINDEN VON METALLISCHEN BAUELEMENTEN**
METHOD AND DEVICE FOR JOINING METAL ELEMENTS
PROCÉDÉ ET DISPOSITIF POUR RELIER DES ÉLÉMENTS STRUCTURELS MÉTALLIQUES

(30) Priorität: 20.03.2006 DE 102006012674
(43) Veröffentlichungstag der Anmeldung: 03.12.2008
(73) Patentinhaber: MTU Aero Engines AG, 80995 München (DE)
(72) Erfinder: HANRIEDER, Herbert, 85411 Hohenkammer (DE); GINDORF, Alexander, 85247 Schwabhausen (DE)
(86) Internationale Anmeldenummer: PCT/DE2007/000455
(87) Internationale Veröffentlichungsnummer: WO 2007/107143

(56) Entgegenhaltungen:
- EP-A1- 0 106 061
- DE-A1- 19 858 702
- JP-A- 2000 301 355
- US-A- 3 202 791
- US-A- 4 300 031

## Beschreibung

Die vorliegende Erfindung betrifft ein Verfahren zum Verbinden von metallischen Bauelementen gemäß dem Oberbegriff des Anspruchs 1, insbesondere von Bauelementen einer Gasturbine, wobei das Verbinden entsprechender Verbindungsflächen der Bauelemente mittels eines induktiven Hochfrequenzpressschweißens erfolgt. Die Erfindung betrifft weiterhin eine Vorrichtung zum Verbinden von metallischen Bauelementen gemäß dem Oberbegriff des Anspruchs 8, insbesondere von Bauelementen einer Gasturbine, wobei das Verbinden entsprechender Verbindungsflächen der Bauelemente mittels eines induktiven Hochfrequenzpressschweißens erfolgt. Aus dem Stand der Technik sind verschiedene Verfahren zum Verbinden von metallischen Bauelementen mittels induktivem Hochfrequenzpressschweißens bekannt. So beschreibt die DE 198 58 702 A1 ein Verfahren zum Verbinden von Schaufelteilen einer Gasturbine gemäß dem Oberbegriff des Anspruchs 1, wobei ein Schaufelblattabschnitt und wenigstens ein weiteres Schaufelteil bereitgestellt werden. Dabei werden entsprechende Verbindungsflächen dieser Elemente im Wesentlichen fluchtend beabstandet zueinander positioniert und anschließend durch Erregen eines Induktors mit hochfrequentem Strom und durch Zusammenfahren unter Berührung ihrer Verbindungsflächen miteinander verschweißt. Dabei wird der Induktor mit einer konstanten Frequenz, die im Allgemeinen über 0,75 MHz liegt, erregt. Die Frequenz wird zudem in Abhängigkeit von der Geometrie der Verbindungsflächen gewählt. Bei dem induktiven Hochfrequenzpressschweißen ist die gleichzeitige und homogene Erwärmung der beiden Schweißpartner für die Qualität der Fügestelle von entscheidender Bedeutung. Bisher wurde der Fügeprozess kraftgesteuert durchgeführt. Nachteilig daran ist jedoch, dass hierbei die resultierenden Bauteile bei Verwendung gleicher Bauelemente unterschiedliche Längen oder Maße aufweisen können.

Es ist daher Aufgabe der vorliegenden Erfindung ein gattungsgemäßes Verfahren zum Verbinden von metallischen Bauelementen bereitzustellen, bei dem einerseits eine sichere und dauerhafte Verbindung von Bauelementen und andererseits gleiche Längen oder Maße der resultierenden Bauteile bei Verwendung gleicher Bauelemente gewährleistet sind.

Es ist weiterhin Aufgabe der vorliegenden Erfindung eine gattungsgemäße Vorrichtung bereitzustellen, die einerseits eine sichere und dauerhafte Verbindung von Bauelementen und andererseits gleiche Längen oder Maße der resultierenden Bauteile bei Verwendung gleicher Bauelemente gewährleistet. Die DE 198 58 702 A1 offenbart eine Vorrichtung gemäß dem Oberbegriff des Anspruchs 8.

Gelöst werden diese Aufgaben durch ein Verfahren gemäß den Merkmalen des Anspruchs 1 sowie eine Vorrichtung gemäß den Merkmalen des Anspruchs 8.

Im erfindungsgemäßen Verfahrens erfolgt zur Ermittlung der Güte der re-sultierenden Verbindung eine Messung der während des Anpress- und Haltevorgangs auftretenden Kräfte. Die Messung erfolgt dabei üblicherweise durch mindestens einen Kraftsensor. Bei bestimmten Ausführungsbeispielen hat sich herausgestellt, dass eine Kraft im Bereich von 200 N als Kontrollgröße für eine ideale Fügung bzw. Verbindung der Bauelemente darstellt. Müssen Kräfte größer als 200 N aufgewendet werden, so ist die Fügezone nicht genug aufgeschmolzen bzw. nicht oder nicht genug teigig. Bei Kräften kleiner 200 N ist dagegen die Fügezone zu teigig bzw. zu sehr aufgeschmolzen.

Zur Klarstellung sei hier ausdrücklich erwähnt, dass die Bezeichnung induktives Hochfrequenzpressschweißen das Verfahren bzw. die Vorrichtung im vorliegenden Fall nicht auf einen bestimmten Frequenzbereich festlegt. Vielmehr finden Frequenzen im niederen kHz-Bereich bis hin zum hohen MHz-Bereich Anwendung, so dass auch die neue Bezeichnung induktives Pressschweißen (IPS) eingeführt werden könnte.

Vorteilhafte Ausgestaltungen der Erfindung sind in den jeweiligen Unteransprüchen beschrieben.

Ein erfindungsgemäßes Verfahren zum Verbinden von metallischen Bauelementen, insbesondere von Bauelementen einer Gasturbine, verwendet zum Verbinden entsprechender Verbindungsflächen der Bauelemente ein induktives Hochfrequenzpressschweißen. Dabei wird vorteilhafterweise während oder nach einer genügend großen Erwärmung der Verbindungsflächen das erste Bauelement um einen definierten Weg W an das zweite Bauelement verfahren, angepresst und dort gehalten. Damit ist neben einer sicheren und dauerhaften Verbindung der Bauelemente zudem gewährleistet, dass bei Verwendung gleicher Bauelemente die resultierenden Bauteile gleiche Längen oder Maße aufweisen. Zudem ist dadurch ein korrekter Geometrieübergang in der Fügezone der beiden Verbindungsflächen sichergestellt. Durch den korrekten Geometrieübergang wird zudem die gegebenenfalls notwendige Macharbeit ausschließlich auf diesen Fügebereich reduziert. Bei dem erfindungsgemäßen Verfahren ist es möglich, dass das erste Bauelement in Richtung des zweiten, nicht in Richtung des ersten Bauelements verfahrbaren Bauelements, verfahrbar ist. Es ist aber auch möglich, dass das erste und das zweite Bauelement zueinander verfahrbar sind. Üblicherweise beträgt dabei der Weg W 0,5 bis 10 mm.

In einer weiteren vorteilhaften Ausgestaltung des erfindungsgemäßen Verfahrens wird vor und während des Verfahrens des ersten Bauelements an das zweite Bauelement eine Positions- und Lagekontrolle der Bauelemente durchgeführt. Die Positions- und Lagekontrolle wird dabei üblicherweise mittels einer optischen Messvorrichtung durchgeführt. Durch die Positions- und Lagekontrolle ist ein optimales Verfahren und Aneinanderpressen der zu verbindenden Bauelemente gewährleistet. Zudem können gegebenenfalls Positions- und Lageänderungen während des Verfahrens der Bauelemente durchgeführt werden.

In einer weiteren vorteilhaften Ausgestaltung des erfindungsgemäßen Verfahrens ist das erste Bauelement eine Schaufel oder ein Teil einer Schaufel eines Rotors in einer Gasturbine und das zweite Bauelement ein Ring oder eine Scheibe des Rotors oder ein am Umfang des Rings oder der Scheibe angeordneter Schaufelfuß. Bei diesen aus den genannten Bauelementen zusammengefügten und durch das erfindungsgemäße verfahren herstellten Bauteilen handelt es sich um so genannte BLINGs ("Bladed Ring") oder BLISKs ("Bladed Disk") von Gasturbinentriebwerken. Bei diesen Bauteilen ist es von erheblicher Bedeutung, dass die Enden der Schaufeln relativ zu den Scheiben oder Ringen immer den gleichen Abstand bzw. die Schaufeln eine gleiche Länge aufweisen.

Eine erfindungsgemäße Vorrichtung zum Verbinden von metallischen Bauelementen, insbesondere von Bauelementen einer Gasturbine, verwendet zum Verbinden entsprechender Verbindungsflächen der Bauelemente ein induktives Hochfrequenzpressschweißen. Dabei weist die Vorrichtung mindestens eine Transportvorrichtung zum Verfahren des ersten Bauelements um einen definierten Weg W an das zweite Bauelement oder zum Verfahren des ersten und zweiten Bauelements um den definierten Weg W zueinander sowie zum Anpressen und Halten der Bauelemente auf. Durch die weggeregelte Führung der Bauelemente ist einerseits eine sichere und dauerhafte Verbindung der Bauelemente gewährleistet. Andererseits ist gewährleistet, dass bei Verwendung gleicher Bauelemente die resultierenden Bauteile gleiche Längen oder Maße aufweisen. Zudem wird durch die weggeregelte Führung ein korrekter Geometrieübergang in der Fügezone sichergestellt. Durch die mindestens eine Transportvorrichtung wird das erste Bauelement, zum Beispiel eine Schaufel eines Turbinentriebwerks, um den definierten Weg W an das zweite Bauelement, zum Beispiel einen so genannten BLISK-Rotor, angepresst und gehalten, bis die Verbindungs- bzw. Fügezone abgekühlt ist. Die Transportvorrichtung kann dabei eine Bauelementhalterung sein. Der Weg W beträgt üblicherweise 0,5 bis 10 mm.

Dabei weist die erfindungsgemäße Vorrichtung mindestens einen Kraftsensor zur Messung der während des Anpress- und Haltevorgangs auftretenden Kräfte auf. Bei bestimmten Ausführungsbeispielen hat sich herausgestellt, dass eine Kraft im Bereich von 200 N als Kontrollgröße für eine ideale Fügung bzw. Verbindung der Bauelemente darstellt. Müssen Kräfte größer als 200 N aufgewendet werden, so ist die Fügezone nicht genug aufgeschmolzen bzw. nicht oder nicht genug teigig. Bei Kräften kleiner 200 N ist dagegen die Fügezone zu teigig bzw. zu sehr aufgeschmolzen.

In einer weiteren vorteilhaften Ausgestaltung der erfindungsgemäßen Vorrichtung weist die Vorrichtung mindestens eine Positions- und Lagemessvorrichtung zur Positions- und Lagekontrolle der Bauelemente vor und während des Verfahrens des ersten Bauelements an das zweite Bauelement auf. Durch die Positions- und Lagekontrolle ist ein optimales Verfahren und Aneinanderpressen der zu verbindenden Bauelemente gewährleistet. Zudem können gegebenenfalls Positions- und Lageänderungen während des Verfahrens der Bauelemente durchgeführt werden. Üblicherweise ist die Positions- und Lagemessvorrichtung eine optische Messvorrichtung.

In einer weiteren vorteilhaften Ausgestaltung der erfindungsgemäßen Vorrichtung ist das erste Bauelement eine Schaufel eines in einer Gasturbine verwendeten Rotors oder ein Teil davon und das zweite Bauelement ein Ring oder eine Scheibe des Rotors oder ein am Umfang des Rings oder der Scheibe angeordneter Schaufelfuß. Bei diesen aus den genannten Bauelementen zusammengefügten Bauteilen handelt es sich um so genannte BLINGs ("Bladed Ring") oder BLISKs ("Bladed Disk") von Gasturbinentriebwerken.

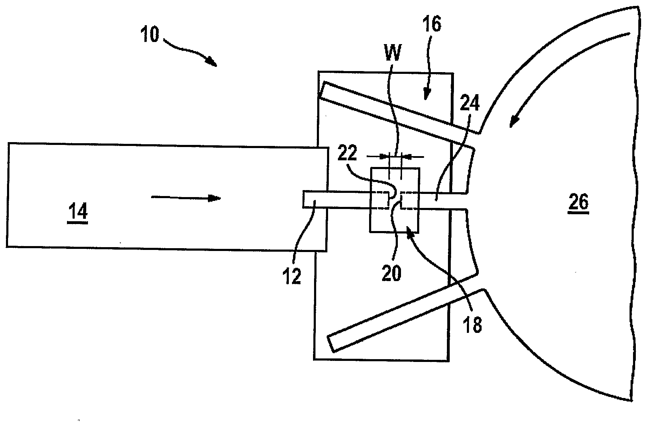

Weitere Vorteile, Merkmale und Einzelheiten der Erfindung ergeben sich aus der nachfolgenden Beschreibung eines zeichnerisch dargestellten Ausführungsbeispiels. Dabei zeigt die Figur eine schematische Darstellung einer erfindungsgemäßen Vorrichtung.

Die Vorrichtung 10 besteht dabei aus einem Generator 16 zur Erzeugung der notwendigen Schweißenergie und einem Induktor 18. Durch Erregen des Induktors 18 mit hochfrequentem Strom werden Verbindungsflächen 20, 22 der Bauelemente 12, 24 erwärmt. Die Erwärmung erfolgt dabei bis mindestens nahe dem Schmelzpunkt der Materialien, aus denen die Bauelemente 12, 24 hergestellt sind. In dem dargestellten Ausführungsbeispiel ist das erste Bauelement 12 Teil einer Schaufel, die mit dem zweiten Bauelement 24, nämlich einem Schaufelfuß, der am Umfang einer Scheibe 26 ausgebildet ist. Die Scheibe 26 stellt dabei einen so genannten BLISK-Rotor dar.

Des Weiteren erkennt man, dass das erste Bauelement 12 in einer Bauelementehalterung 14 gehaltert ist. Die Bauelementehalterung 14 dient dabei als Transportvorrichtung für das erste Bauelement 12. Zum Verbinden des ersten Bauelements 12 mit dem zweiten Bauelement 24 wird die Bauelementehalterung 14 in Pfeilrichtung verschoben. Dabei ergibt sich ein Verfahren des ersten Bauelements 12 um einen definierten Weg W an das zweite Bauelement 24.

Durch das Ausführungsbeispiel wird deutlich, dass das erfindungsgemäße Verfahren wie auch die Vorrichtung 10 sowohl für die Herstellung wie auch die Reparatur von Bauelementen einer Gasturbine geeignet ist.

## Patentansprüche

1. Verfahren zum Verbinden von metallischen Bauelementen (12, 24), insbesondere von Bauelementen einer Gasturbine, wobei das Verbinden entsprechender Verbindungsflächen (20, 22) der Bauelemente (12, 24) mittels eines induktiven Hochfrequenzpressschweißens erfolgt, wobei während oder nach einer genügen großen Erwärmung der Verbindungsflächen (20, 22) das erste Bauelement (12) um einen definierten Weg (W) an das zweite Bauelement (24) verfahren, angepresst und dort gehalten wird, **dadurch gekennzeichnet, dass** zur Ermittlung der Güte der Verbindung eine Messung der während des Anpress- und Haltevorgangs auftretenden Kräfte erfolgt.

2. Verfahren nach Anspruch 1, **dadurch gekennzeichnet, dass** das erste Bauelement (12) in Richtung des zweiten, nicht in Richtung des ersten Bauelements (12) verfahrbaren Bauelements (24), verfahrbar ist.

3. Verfahren nach Anspruch 1, **dadurch gekennzeichnet, dass** das erste und das zweite Bauelement (12, 24) zueinander verfahrbar sind.

4. Verfahren nach einem der vorhergehenden Ansprüche, **dadurch gekennzeichnet, dass** der Weg (W) 0,5 bis 10 mm beträgt.

5. Verfahren nach einem der vorhergehenden Ansprüche, **dadurch gekennzeichnet, dass** vor und während des Verfahrens des ersten Bauelements (12) an das zweite Bauelement (24) eine Positions- und Lagekontrolle der Bauelemente (12, 24) durchgeführt wird.

6. Verfahren nach Anspruch 5, **dadurch gekennzeichnet, dass** die Positions- und Lagekontrolle mittels einer optischen Messvorrichtung durchgeführt wird.

7. Verfahren nach einem der vorhergehenden Ansprüche, **dadurch gekennzeichnet, dass** das erste Bauelement (12) eine Schaufel oder ein Teil einer Schaufel eines Rotors in einer Gasturbine ist und das zweite Bauelement (10, 24) ein Ring oder eine Scheibe (26) des Rotors oder ein am Umfang des Rings oder der Scheibe (26) angeordneter Schaufelfuß (24) ist.

8. Vorrichtung zum Verbinden von metallischen Bauelementen (12, 24), insbesondere von Bauelementen einer Gasturbine, wobei das Verbinden entsprechender Verbindungsflächen (20, 22) der Bauelemente (12, 24) mittels eines induktiven Hochfrequenzpressschweißens erfolgt, wobei die Vorrichtung (10) mindestens eine Transportvorrichtung zum Verfahren des ersten Bauelements (12) um einen definierten Weg (W) an das zweite Bauelement (24) oder zum Verfahren des ersten und zweiten Bauelements um den definierten Weg (W) zueinander sowie zum Anpressen und Halten der Bauelemente (14, 24) aufweist, **dadurch gekennzeichnet, dass** die Vorrichtung (10) mindestens einen Kraftsensor zur Messung der während des Anpress- und Haltevorgangs auftretenden Kräfte aufweist.

9. Vorrichtung nach Anspruch 8, **dadurch gekennzeichnet, dass** die Transportvorrichtung eine Bauelementhalterung (14) ist.

10. Vorrichtung nach Anspruch 8 oder 9, **dadurch gekennzeichnet, dass** der Weg (W) 0,5 bis 10 mm beträgt.

11. Vorrichtung nach einem der Ansprüche 8 bis 10, **dadurch gekennzeichnet, dass** die Vorrichtung (10) mindestens eine Positions- und Lagemessvorrichtung zur Positions- und Lagekontrolle der Bauelemente (12, 24) vor und während des Verfahrens des ersten Bauelements (12) an das zweite Bauelement (24) aufweist.

12. Vorrichtung nach Anspruch 11, **dadurch gekennzeichnet, dass** die Positions- und Lagemessvorrichtung eine optischen Messvorrichtung ist.

13. Vorrichtung nach einem der Ansprüche 8 bis 12, **dadurch gekennzeichnet, dass** das erste Bauelement (12) eine Schaufel oder ein Teil einer Schaufel eines Rotors in einer Gasturbine ist und das zweite Bauelement (10, 24) ein Ring oder eine Scheibe (26) des Rotors oder ein am Umfang des Rings oder der Scheibe (26) angeordneter Schaufelfuß (24) ist.

## Claims

1. Method for joining metal components (12, 24), in particular components of a gas turbine, corresponding welding surfaces (20, 22) of the components (12, 24) being joined by means of inductive high-frequency pressure welding, while or after the welding surfaces (20, 22) are being or have been heated sufficiently and to a large extent, the first component (12) being moved to the second component (24) by a defined distance (W), pressed on and held there, **characterised in that**, in order to determine the quality of the join, the forces occurring during the pressing-on and holding process are measured.

2. Method according to claim 1, **characterised in that** the first component (12) is movable towards the second component (24), which is not movable towards the first component (12).

3. Method according to claim 1, **characterised in that** the first and the second component (12, 24) are movable relative to each other.

4. Method according to any of the preceding claims, **characterised in that** the distance (W) is 0.5 to 10 mm.

5. Method according to any of the preceding claims, **characterised in that**, before and during the movement of the first component (12) to the second component (24), the position and orientation of the components (12, 24) is checked.

6. Method according to claim 5, **characterised in that** the position and orientation is checked by means of an optical measurement device.

7. Method according to any of the preceding claims, **characterised in that** the first component (12) is a blade or a part of a blade of a rotor in a gas turbine and the second component (10, 24) is a ring or a disc (26) of the rotor or a blade root (24) arranged on the circumference of the ring or of the disc (26).

8. Device for joining metal components (12, 24), in particular components of a gas turbine, corresponding welding surfaces (20, 22) of the components (12, 24) being joined by means of inductive high-frequency pressure welding, the device (10) comprising at least one transport device for moving the first component (12) to the second component (24) by a defined distance (W) or for moving the first and the second component relative to each other by the defined distance (W) and for pressing on and holding the components (14, 24), **characterized in that** the device (10) comprises at least one force sensor for measuring the forces occurring during the pressing-on and holding process.

9. Device according to claim 8, **characterised in that** the transport device is a component holder (14).

10. Device according to either claim 8 or claim 9, **characterised in that** the distance (W) is 0.5 to 10 mm.

11. Device according to any of claims 8 to 10, **characterised in that** the device (10) comprises at least one position and orientation measurement device for checking the position and orientation of the components (12, 24) before and during the movement of the first component (12) to the second component (24).

12. Device according to claim 11, **characterised in that** the position and orientation measurement device is an optical measurement device.

13. Device according to any of claims 8 to 12, **characterised in that** the first component (12) is a blade or a part of a blade of a rotor in a gas turbine and the second component (10, 24) is a ring or a disc (26) of the rotor or a blade root (24) arranged on the circumference of the ring or of the disc (26).

## Revendications

1. Procédé d'assemblage de composants métalliques (12, 24), notamment de composants d'une turbine à gaz, où l'assemblage de surfaces d'assemblage (20, 22) correspondantes des composants (12, 24) a lieu au moyen d'un soudage sous pression inductif à haute fréquence, où, pendant ou après un réchauffement suffisamment élevé des surfaces d'assemblage (20, 22), le premier composant (12) est mené par un trajet défini (W) pressé contre le deuxième composant (24) et y est maintenu, **caractérisé en ce que**, pour l'évaluation de la qualité de l'assemblage, une mesure des forces en présence pendant les processus de pressage et de maintien a lieu.

2. Procédé selon la revendication 1, **caractérisé en ce que** le premier composant (12) peut être déplacé en direction du deuxième, et non en direction du composant (24) pouvant être déplacé en direction du premier composant (12).

3. Procédé selon la revendication 1, **caractérisé en ce que** les premier et deuxième composants (12, 24) peuvent se déplacer l'un vers l'autre.

4. Procédé selon l'une des revendications précédentes, **caractérisé en ce que** le trajet (W) est de 0,5 à 10 mm.

5. Procédé selon l'une des revendications précédentes, **caractérisé en ce qu'**avant et pendant le déplacement du premier composant (12) vers le deuxième composant (24), un contrôle de la position et de l'orientation des composants (12, 24) est effectué.

6. Procédé selon la revendication 5, **caractérisé en ce que** le contrôle de la position et de l'orientation est effectué au moyen d'un dispositif de mesure optique.

7. Procédé selon l'une des revendications précédentes, **caractérisé en ce que** le premier composant (12) est une aube ou une partie d'une aube d'un rotor dans un turbine à gaz et que le deuxième composant (10, 24) est un anneau ou un disque (26) du rotor ou une emplanture d'aube (24) disposée sur le périmètre de l'anneau ou du disque (26).

8. Dispositif d'assemblage de composants métalliques (12, 24) notamment de composants d'une turbine à gaz, où l'assemblage de surfaces d'assemblage (20, 22) correspondantes des composants (12, 24) a lieu au moyen d'un soudage sous pression inductif à haute fréquence, où le dispositif (10) présente au moins un dispositif de transport pour le déplacement du premier composant (12) vers le deuxième composant (24) par un trajet défini (W) ou pour le déplacement des premier et deuxième composants l'un vers l'autre par un trajet défini (W), ainsi que pour le pressage et le maintien des composants (14, 24), **caractérisé en ce que** le dispositif (10) présente au moins un capteur de force pour la mesure des forces en présence pendant le processus de pressage et de maintien.

9. Dispositif selon la revendication 8, **caractérisé en ce que** le dispositif de transport est un support de composants (14).

10. Dispositif selon la revendication 8 ou 9, **caractérisé en ce que** le trajet (W) est de 0,5 à 10 mm.

11. Dispositif selon l'une des revendications 8 à 10, **caractérisé en ce que** le dispositif (10) présente au moins un dispositif de mesure de position et d'orientation pour le contrôle de la position et de l'orientation des composants (12, 24) avant et pendant le déplacement du premier composant (12) vers le deuxième composant (24).

12. Dispositif selon la revendication 11 **caractérisé en ce que** le dispositif de mesure de la position et de l'orientation est un dispositif de mesure optique.

13. Dispositif selon l'une des revendications 8 à 12, **caractérisé en ce que** le premier composant (12) est une aube ou une partie d'une aube d'un rotor dans une turbine à gaz et que le deuxième composant (10, 24) est un anneau ou un disque (26) du rotor ou une emplanture d'aube (24) disposée sur le périmètre de l'anneau ou du disque (26).
